# EUROPEAN PATENT APPLICATION

(11) **EP 2 775 379 A1**
(43) Date of publication of application: **10.09.2014**
(21) Application number: 14156144.9
(22) Date of filing: 21.02.2014
(51) Int. Cl.: G06F 3/042, H04N 9/31

(54) **Projector**

(30) Priority: 05.03.2013 JP 2013042520
(71) Applicant: Funai Electric Co., Ltd., Daito-shi, Osaka 574-0013 (JP)
(72) Inventor: Kuki, Kohei, Daito-shi, Osaka 574-0013 (JP)
(74) Representative: Grünecker, Kinkeldey, Stockmair & Schwanhäusser

(57) **Abstract**

This projector includes a laser beam generation portion (103, 104, 105), an image projection portion (109) including a scanning portion (109a) and projecting an image (31) on a projection area (3), a beam receiving portion (21) receiving a laser beam reflected by a detection object (4) through a lens (22), a control portion (101), and a position adjustment portion (23, 24) adjusting relative positions of the beam receiving portion and the lens in a direction orthogonal to the optical axis direction of the laser beam received by the beam receiving portion.

## Description

### BACKGROUND OF THE INVENTION

### Field of the Invention

The present invention relates to a projector, and more particularly, it relates to a projector including a laser beam generation portion.

### Description of the Background Art

A projector including a laser beam generation portion is known in general, as disclosed in Japanese Patent Laying-Open No. 2009-258569, for example.

The aforementioned Japanese Patent Laying-Open No. 2009-258569 discloses a projector module (projector) including a laser diode outputting a laser beam, a projector scanning means scanning the laser beam and projecting an image on a projection area, a photodiode receiving the laser beam reflected by a measurement object and a control means detecting that the measurement object has touched the projected image when the photodiode receives the laser beam. This projector module further includes a reflecting mirror introducing the laser beam reflected by the measurement object into the photodiode and a beam splitter.

However, the projector module described in the aforementioned Japanese Patent Laying-Open No. 2009-258569 may not be capable of properly introducing the laser beam reflected by the measurement object into the photodiode, due to arrangement accuracy (assembling accuracy) of optical systems such as the reflecting mirror and the photodiode. In this case, the arrangement positions of the optical systems must be readjusted by decomposing the projector module (extracting components of the optical systems) in order to properly introduce the laser beam reflected by the measurement object into the photodiode. Thus, it disadvantageously takes time and labor to adjust the optical systems in order to properly introduce the laser beam reflected by the measurement object into the photodiode.

### SUMMARY OF THE INVENTION

The present invention has been proposed in order to solve the aforementioned problem, and an object of the present invention is to provide a projector easily adjustable to properly introduce a laser beam reflected by a detection object into a beam receiving portion also after assembling thereof.

A projector according to an aspect of the present invention includes a laser beam generation portion outputting a laser beam, an image projection portion including a scanning portion scanning the laser beam and projecting an image on a projection area, a beam receiving portion receiving the laser beam reflected by a detection object through a lens, a control portion detecting an operation performed on the projected image with the detection object on the basis of a receptive result in the beam receiving portion and a position adjustment portion adjusting relative positions of the beam receiving portion and the lens in a direction orthogonal to the optical axis direction of the laser beam received by the beam receiving portion.

As hereinabove described, the projector according to the aspect of the present invention is provided with the position adjustment portion adjusting the relative positions of the beam receiving portion and the lens in the direction orthogonal to the optical axis direction of the laser beam received by the laser beam receiving portion, whereby the position adjustment portion can move and adjust at least either the beam receiving portion or the lens to properly introduce the laser beam reflected by the detection object into the beam receiving portion even if the laser beam reflected by the detection object cannot be properly introduced into the beam receiving portion due to arrangement accuracy (assembling accuracy) of optical systems such as the lens and the beam receiving portion. Thus, the projector can be easily adjusted to properly introduce the laser beam reflected by the detection object into the beam receiving portion also after assembling thereof, whereby the control portion can precisely detect the operation such as a touch operation performed on the projected image with the detection object.

In the aforementioned projector according to the aspect, the position adjustment portion is preferably configured to move at least either the beam receiving portion or the lens, in order to move a position where the beam receiving portion receives the laser beam reflected by the detection object substantially perpendicularly to a projection plane for the image. According to this structure, the position adjustment portion can easily adjust the distance (detection height) from the image allowing the control portion to detect the operation performed with the detection object, whereby the control portion can easily precisely detect the operation such as a touch operation performed on the projected image with the detection object.

In the aforementioned projector according to the aspect, the lens preferably includes a condensing lens condensing the laser beam reflected by the detection object on the beam receiving portion. According to this structure, the condensing lens can condense the laser beam reflected by the detection object so that the beam receiving portion receives the same, whereby the beam receiving portion can more reliably detect the laser beam reflected by the detection object.

In this case, the position adjustment portion is preferably configured to adjust the relative positions of the beam receiving portion and the lens, in order to condense the laser beam reflected by the detection object positioned at a distance within a prescribed range from the projection plane on a beam receiving region of the beam receiving portion and in order to condense the laser beam reflected by the detection object positioned farther beyond the distance within the prescribed range from the projection plane on a region of the beam receiving portion other than the beam receiving region. According to this structure, the control portion reliably detects the operation performed with the detection object positioned at a proper detection height without detecting the operation performed with the detection object positioned farther beyond the detection height, whereby the same can easily precisely detect the operation performed with the detection object.

In the aforementioned structure of condensing the laser beam reflected by the detection object positioned at the distance within the prescribed range from the projection plane on the beam receiving region of the beam receiving portion, a mask member limiting a beam receiving range of the beam receiving portion is preferably mounted on the beam receiving portion, and the projector is preferably configured to condense the laser beam reflected by the detection object positioned at the distance within the prescribed range from the projection plane on the beam receiving region of the beam receiving portion and to condense the laser beam reflected by the detection object positioned farther beyond the distance within the prescribed range from the projection plane on the region of the beam receiving portion other than the beam receiving region by adjusting a position where the mask member is mounted and the relative positions of the beam receiving portion and the lens with the position adjustment portion. According to this structure, the mask member can easily adjust the beam receiving region of the beam receiving portion, whereby the control portion can be easily adjusted to be capable of reliably detecting the operation performed with the detection object positioned at the proper detection height.

In this case, the mask member is preferably configured to limit the beam receiving range of the beam receiving portion by partially covering a side of the beam receiving portion farther from the projection plane. According to this structure, the control portion can be easily rendered not to detect the operation performed with the detection object positioned farther beyond the detection height.

In the aforementioned projector according to the aspect, the control portion is preferably configured to control the position adjustment portion to adjust the relative positions of the beam receiving portion and the lens, in order to adjust the distance from the projection plane for detecting the operation performed with the detection object in response to an application corresponding to the projected image. According to this structure, the control portion can reduce the distance (detection height) from the projection plane for detecting the operation performed with the detection object when the interval between operation buttons is small and detection accuracy for the detection object is to be improved or can increase the distance (detection height) from the projection plane for detecting the operation performed with the detection object when the detection object is not to be brought into contact with the projection plane, for example, whereby the same can properly detect the operation performed with the detection object in response to the application.

In this case, the control portion is preferably configured to control the position adjustment portion to adjust the relative positions of the beam receiving portion and the lens so that the distance from the projection plane for detecting the operation performed with the detection object is zero when projecting the image correspondingly to an application displaying a keyboard. According to this structure, the control portion recognizes the operation performed with the detection object when the detection object actually touches the projection plane, whereby the same can be inhibited from false detection in the process of movement of the detection object or the like. Consequently, the control portion can correctly detect the user's operation performed on the keyboard.

In the aforementioned projector according to the aspect, the control portion is preferably configured to switch the projector between a first state of detecting the operation performed with the detection object when the detection object is in contact with the projection plane and a second state of detecting the operation performed with the detection object when the detection object is in a noncontact state separating from the projection plane by a prescribed distance by controlling the position adjustment portion to move at least either the beam receiving portion or the lens. According to this structure, the control portion can switch the detection height for detecting the operation performed with the detection object in response to the user's intention.

In the aforementioned projector according to first aspect, the position adjustment portion preferably includes a driving portion moving the lens with respect to the beam receiving portion in the direction orthogonal to the optical axis direction of the laser beam received by the beam receiving portion. According to this structure, the position adjustment portion can easily adjust the relative positions of the beam receiving portion and the lens by moving the lens while fixing the beam receiving portion.

In this case, the driving portion preferably includes a linear actuator linearly moving the lens. According to this structure, the driving portion can swiftly linearly move the lens with the linear actuator, whereby the time required for adjusting the position of the lens can be easily reduced.

In the aforementioned projector according to the aspect, the position adjustment portion preferably includes a moving mechanism employed by the user for moving at least either the beam receiving portion or the lens in the direction orthogonal to the optical axis direction of the laser beam received by the beam receiving portion. According to this structure, the user can easily adjust the projector to properly introduce the laser beam reflected by the detection object into the beam receiving portion by manually moving at least either the beam receiving portion or the lens with the moving mechanism without decomposing the projector. The term "user" includes an operator initially adjusting the projector at the time of production thereof, in addition to a person using the projector.

In this case, the moving mechanism is preferably so configured that the user can move at least either the beam receiving portion or the lens after assembling of the projector. According to this structure, the user can easily adjust the position of the beam receiving portion or the lens after assembling of the projector, without decomposing the same.

In the aforementioned projector according to the aspect, the image projection portion is preferably configured to obliquely project the laser beam on the projection plane, and the beam receiving portion is preferably arranged on a side of the image projection portion closer to the projection plane and configured to receive the laser beam obliquely projected from the image projection portion on the projection plane and reflected by the detection object. According to this structure, the beam receiving portion arranged in the vicinity of the projection plane can easily detect the laser beam reflected by the detection object.

In the aforementioned projector according to the aspect, the control portion is preferably configured to detect a touch operation performed on the projected image with the detection object. According to this structure, the control portion can precisely detect the touch operation performed on the projected image with the detection object.

According to the present invention, as hereinabove described, the projector can be easily adjusted to properly introduce the laser beam reflected by the detection object into the beam receiving portion also after assembling thereof.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing a used state of a projector according to an embodiment of the present invention;
Fig. 2 is a block diagram showing the structure of the projector according to the embodiment of the present invention;
Fig. 3 is a diagram showing a first example for illustrating a lens position in the projector according to the embodiment of the present invention;
Fig. 4 is a diagram showing a second example for illustrating the lens position in the projector according to the embodiment of the present invention;
Fig. 5 is a flow chart for illustrating lens position adjustment processing performed by a main CPU of the projector according to the embodiment of the present invention in response to an application; and
Fig. 6 is a block diagram showing the structure of a projector according to a modification of the embodiment of the present invention.

### DESCRIPTION OF THE PREFERRED EMBODIMENTS

An embodiment of the present invention is now described with reference to the drawings.

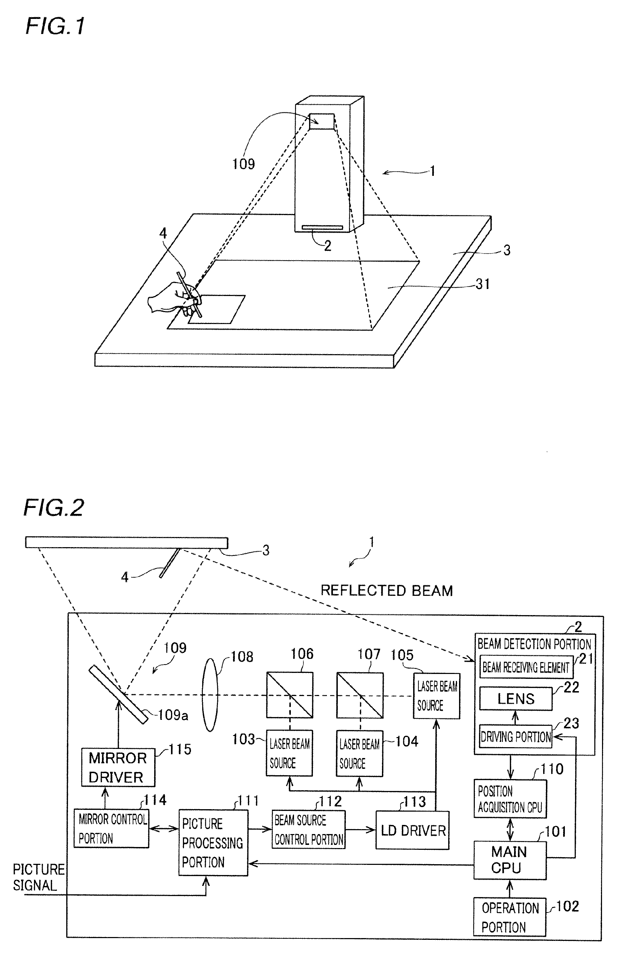

First, the structure of a projector 1 according to the embodiment of the present invention is described with reference to Figs. 1 to 4.

The projector 1 according to the embodiment of the present invention is configured to be used in a state arranged on a table 3, as shown in Fig. 1. This projector 1 is configured to project an image 31 on the upper surface of a projection area such as the table 3. Further, the projector 1 is configured to accept an operation such as a touch operation performed on the image 31 with an operating element such as a touch pen 4. The table 3 is an example of the "projection area" in the present invention, and the touch pen 4 is an example of the "detection object" in the present invention. The projector 1 may be an electronic apparatus such as a portable information terminal.

The projector 1 includes a beam detection portion 2, a main CPU 101, an operation portion 102, three laser beam sources 103, 104 and 105, two polarizing beam splitters 106 and 107, a lens 108, an image projection portion 109, a position acquisition CPU 110, a picture processing portion 111, a beam source control portion 112, an LD (laser diode) driver 113, a mirror control portion 114 and a mirror driver 115, as shown in Fig. 2. The image projection portion 109 includes an MEMS mirror 109a. The main CPU 101 is an example of the "control portion" in the present invention. The laser beam sources 103 to 105 are examples of the "laser beam generation portion" in the present invention, and the MEMS mirror 109a is an example of the "scanning portion" in the present invention.

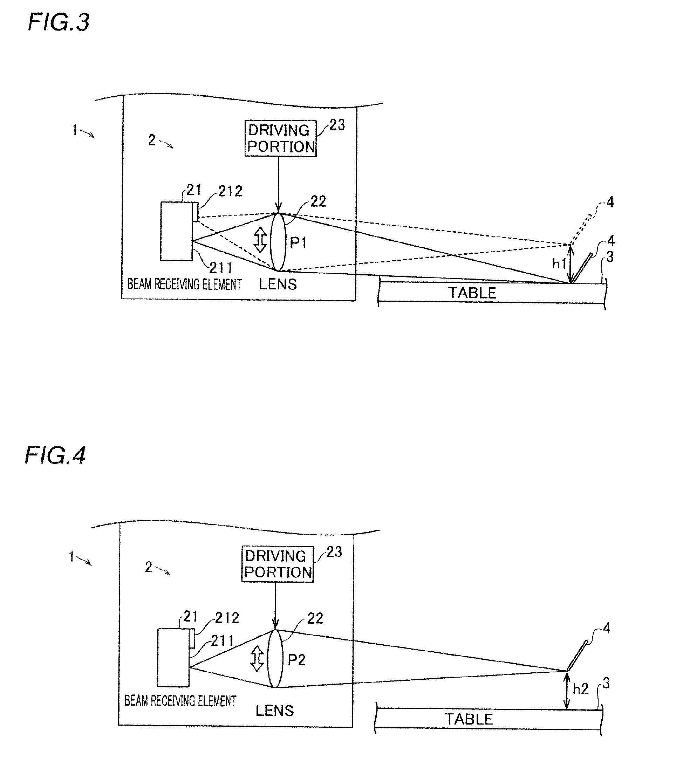

The beam detection portion 2 is configured to receive (detect) laser beams reflected by the touch pen 4, as shown in Fig. 2. Further, the beam detection portion 2 is connected to the position acquisition CPU 110, and configured to transmit beam receiving information indicating that the same has received the laser beams to the position acquisition CPU 110. More specifically, the beam detection portion 2 includes a beam receiving element 21, a lens 22 and a driving portion 23. The beam receiving element 21 is configured to receive the laser beams reflected by the touch pen 4 through the lens 22. Further, the beam receiving element 21 is arranged on a side of the image projection portion 109 closer to a projection plane (table 3), and configured to receive the laser beams obliquely projected from the image projection portion 109 on the projection plane and reflected by the touch pen 4, as shown in Figs. 3 and 4. A mask 212 limiting a beam receiving range of the beam receiving element 21 is mounted on the beam receiving element 21. More specifically, the mask 212 is stuck to the beam receiving element 21, to cover an upper portion (part of a side farther from the projection plane) of a beam receiving region 211. Thus, the area of the beam receiving region 211 of the beam receiving element 21 receiving the laser beams is adjusted. Consequently, the reflected laser beams can be properly introduced into the beam receiving region 211 of the beam receiving element 21, even if the aberration of the lens 22 is dispersed. The beam receiving element 21 is an example of the "beam receiving portion" in the present invention, and the driving portion 23 is an example of the "position adjustment portion" in the present invention. The mask 212 is an example of the "mask member" in the present invention.

The lens 22 is constituted of a condensing lens condensing the laser beams reflected by the touch pen 4 on the beam receiving element 21. This lens 22 is configured to be movable in a direction (vertical direction) orthogonal to the optical axis direction of the laser beams received by the beam receiving element 21.

According to this embodiment, the driving portion 23 is configured to adjust relative positions of the beam receiving element 21 and the lens 22 in the direction orthogonal to the optical axis direction of the laser beams received by the beam receiving element 21, as shown in Figs. 3 and 4. More specifically, the driving portion 23 is configured to relatively move the lens 22 with respect to the beam receiving element 21. In other words, the driving portion 23 is configured to relatively move the beam receiving element 21 and the lens 22 in order to move a position where the beam receiving element 21 receives the laser beams reflected by the touch pen 4 substantially perpendicularly to the projection plane (upper surface of the table 3) for the image 31. Further, the driving portion 23 is configured to move the lens 22 with respect to the beam receiving element 21 in the direction (vertical direction) orthogonal to the optical axis direction of the laser beams received by the beam receiving element 21. The driving portion 23 includes a linear actuator linearly moving the lens 22. For example, the driving portion 23 is constituted of a voice coil motor. Thus, the driving portion 23 can swiftly precisely move the lens 22.

Further, the driving portion 23 is configured to relatively move the beam receiving element 21 and the lens 22, in order to condense the laser beams reflected by the touch pen 4 positioned at a distance (height) within a prescribed range from the projection plane (upper surface of the table 3) on the beam receiving region 211 of the beam receiving element 21, and in order to condense the laser beams reflected by the touch pen 4 positioned farther (located on a higher position) beyond the distance (height) within the prescribed range from the projection plane on a region of the beam receiving element 21 other than the beam receiving region 211. In addition, the driving portion 23 is configured to condense the laser beams reflected by the touch pen 4 positioned at the distance (height) within the prescribed range from the projection plane on the beam receiving region 211 of the beam receiving element 21 and to condense the laser beams reflected by the touch pen 4 positioned farther (located on the higher position) beyond the distance (height) within the prescribed range from the projection plane on the region of the beam receiving element 21 other than the beam receiving region 211 by adjusting a position where the mask 212 is mounted and the relative positions of the beam receiving element 21 and the lens 22. Referring to Fig. 3, for example, the driving portion 23 condenses the laser beams reflected by the touch pen 4 positioned on the projection plane (upper surface of the table 3) on the beam receiving region 211 of the beam receiving element 21. Further, the driving portion 23 condenses the laser beams reflected by the touch pen 4 located on a position at a height h1 from the projection plane (upper surface of the table 3) outward beyond the upper side of the beam receiving region 211 of the beam receiving element 21.

The main CPU 101 is configured to control the respective portions of the projector 1. The operation portion 102 is provided for accepting an operation of turning on the projector 1, an operation of changing the resolution of the image 31 and the like. The laser beam source 103 is configured to apply a blue laser beam to the MEMS mirror 109a through the polarizing beam splitter 106 and the lens 108. The laser beam sources 104 are configured to apply green and red laser beams to the MEMS mirror 109a through the beam splitters 107 and 106 and the lens 108 respectively.

The image projection portion 109 is configured to project the image 31 (see Fig. 1) on the table 3. More specifically, the image projection portion 109 is so configured that the MEMS mirror 109a thereof scans the laser beams emitted from the laser beam sources 103 to 105 and projects the image 31 on the table 3. Further, the image projection portion 109 is configured to obliquely project the laser beams on the projection plane (table 3). The MEMS mirror 109a is configured to scan the laser beams along two axes in the horizontal direction and the vertical direction. Further, the MEMS mirror 109a is configured to scan the horizontal direction at a high speed by resonance driving and to scan the vertical direction at a low speed by DC driving.

The position acquisition CPU 110 is configured to acquire the position of the touch pen 4 on the basis of temporal information as to the time when the beam receiving portion 2 has detected the reflected laser beams and scanning loci of the laser beams. More specifically, the position acquisition CPU 110 acquires the position (coordinates) of the touch pen 4 corresponding to the image 31 by specifying positions of the detected laser beams scanned with respect to the image 31 on the basis of the time required for detecting the laser beams from horizontal synchronizing signals and the scanning loci of the laser beams.

The picture processing portion 111 is configured to control projection of a picture on the basis of a picture signal received from an external apparatus such as a PC (personal computer). More specifically, the picture processing portion 111 is configured to control driving of the MEMS mirror 109a through the mirror control portion 114 and to control the application of the laser beams by the laser beam sources 103 to 105 through the beam source control portion 112 on the basis of the picture signal received from the external apparatus.

The beam source control portion 112 is configured to control the application of the laser beams by the laser beam sources 103 to 105 by controlling the LD driver 113 on the basis of the control by the picture processing portion 111. More specifically, the beam source control portion 112 is configured to perform control of making the laser beam sources 103 to 105 emit the laser beams of colors corresponding to respective pixels of the image 31 in timing with the scanning of the MEMS mirror 109a.

The mirror control portion 114 is configured to control driving of the MEMS mirror 109a by controlling the mirror driver 115 on the basis of the control by the picture processing portion 111.

According to this embodiment, the main CPU 101 is configured to control the driving portion 23 to relatively move the beam receiving element 21 and the lens 22, in order to adjust a distance (detection height) from the projection plane for detecting the operation performed with the touch pen 4 in response to an application corresponding to the projected image 31. More specifically, the main CPU 101 is configured to improve positional accuracy for detecting the operation performed with the touch pen 4 by reducing (to 0 cm, for example) the detection height for detecting the operation performed with the touch pen 4 in a case of an application displaying a character input keyboard or the like. Further, the main CPU 101 is configured to be capable of detecting an operation of a hand (finger) as a detection object without requiring the user to bring his/her hand (finger) into contact with the projection plane by increasing (to 2 to 3 cm, for example) the detection height for detecting the operation of the hand (finger) in a case of an application displaying a medical record or a cooking recipe, for example. Thus, the main CPU 101 detects the operation of the hand (finger) as the detection object without requiring the user to bring his/her hand (finger) into contact with the projection plane, whereby the same can prevent the hand (finger) and the projection plane from staining.

Further, the main CPU 101 is configured to switch the projector 1 between a first state (see Fig. 3) of detecting the operation performed with the touch pen 4 when the touch pen 4 is in contact with the projection plane and a second state of detecting the operation performed with the touch pen 4 when the touch pen 4 is in a noncontact state separating from the projection plane by a prescribed distance (height h2 (see Fig. 4), for example) by controlling the driving portion 23 to relatively move the beam receiving element 21 and the lens 22. In this case, the main CPU 101 can switch the projector 1 between the first and second states through an operation of the user on the operation portion 102.

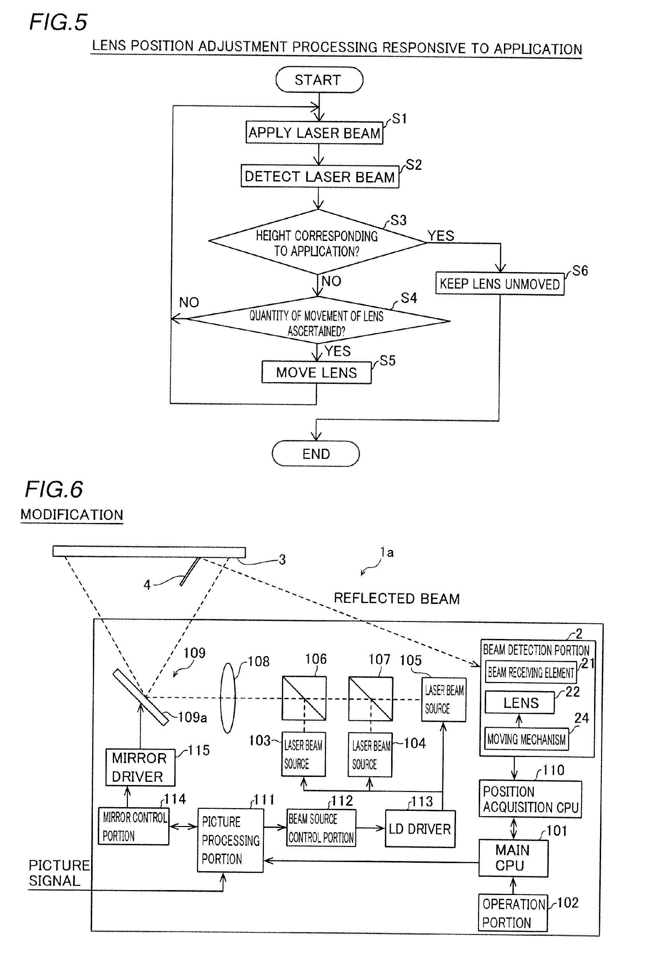

Lens position adjustment processing performed by the main CPU 101 of the projector 1 according to the embodiment of the present invention in response to an application is now described with reference to Fig. 5.

When receiving a signal indicating that a prescribed application has been started through an externally connected apparatus such as a PC, the main CPU 101 controls the laser beam sources 103 to 105 to apply the laser beams for projecting the image 31 at a step S1. Then, the main CPU 101 detects the laser beams at a step S2. Further, the main CPU 101 measures the height of the touch pen 4 (distance from the projection plane) through a beam receiving position in the beam receiving region 211 of the beam receiving element 21.

At a step S3, the main CPU 101 determines whether or not the detection height for detecting the operation performed with the touch pen 4 is that corresponding to the application. Further, the main CPU 101 calculates the difference between a calibrated value at the time of shipment of the projector 1 and the measured height of the touch pen 4. The main CPU 101 advances to a step S4 if the measured height is not that corresponding to the application, or advances to a step S6 if the measured height is that corresponding to the application.

At the step S4, the main CPU 201 determines the quantity of movement of the lens 22, and determines whether or not the quantity of movement of the lens 22 has been ascertained. In other words, the main CPU 101 determines whether or not the height of the touch pen 4 has been measured and it has been possible to calculate the quantity of movement from the current position of the lens 22. Further, the main CPU 101 confirms the height position of the lens 22, and calculates the quantity of movement of the lens 22 by finely adjusting an error caused by the driving portion 23. When the quantity of movement of the lens 22 has been ascertained, the main CPU 101 advances to a step S5, controls the driving portion 23 to move the lens 22, and thereafter returns to the step S1. When the quantity of movement of the lens 22 has not been ascertained, on the other hand, the main CPU 101 directly returns to the step S1.

When determining that the measured height is that corresponding to the application at the step S3, the main CPU 101 controls the driving portion 23 to keep the position of the lens 22 (to keep the lens 22 unmoved) at the step S6, and terminates the lens position adjustment processing in response to the application.

According to this embodiment, as hereinabove described, the projector 1 is provided with the driving portion 23 adjusting the relative positions of the beam receiving element 21 and the lens 22 in the direction (vertical direction) orthogonal to the optical axis direction of the laser beams received by the beam receiving element 21, whereby the driving portion 23 can relatively move and adjust the beam receiving element 21 and the lens 22 in order to properly introduce the laser beams reflected by the touch pen 4 into the beam receiving element 21 even if the laser beams reflected by the touch pen 4 cannot be properly introduced into the beam receiving element 21 due to arrangement accuracy (assembling accuracy) of optical systems such as the lens 22 and the beam receiving element 23. Thus, the main CPU 101 can precisely detect the operation (touch operation) performed on the projected image 31 with the touch pen 4 by easily controlling the driving portion 23 to adjust the beam receiving element 21 and the lens 22 in order to properly introduce the laser beams reflected by the touch pen 4 into the beam receiving element 21 also after assembling of the projector 1.

According to this embodiment, as hereinabove described, the driving portion 23 is configured to relatively move the beam receiving element 21 and the lens 22 in order to move the position where the beam receiving element 21 receives the laser beams reflected by the touch pen 4 substantially perpendicularly to the projection plane for the image 31. Thus, the driving portion 23 can easily adjust the distance (detection height) from the image 31 allowing the main CPU 101 to detect the operation performed with the touch pen 4, whereby the main CPU 101 can easily precisely detect the operation (touch operation) performed on the projected image 31 with the touch pen 4.

According to this embodiment, as hereinabove described, the lens 22 is constituted of the condensing lens condensing the laser beams reflected by the touch pen 4 on the beam receiving element 21 so that the condensing lens can condense the laser beams reflected by the touch pen 4 and introduce the same into the beam receiving element 21, whereby the beam receiving element 21 can more reliably detect the reflected laser beams.

According to this embodiment, as hereinabove described, the driving portion 23 is configured to adjust the relative positions of the beam receiving element 21 and the lens 22, in order to condense the laser beams reflected by the touch pen 4 positioned at the distance within the prescribed range from the projection plane on the beam receiving region 211 of the beam receiving element 21 and in order to condense the laser beams reflected by the touch pen 4 positioned farther beyond the distance (height h1 (see Fig. 3), for example) within the prescribed range from the projection plane on the region of the beam receiving element 21 other than the beam receiving region 211. Thus, the main CPU 101 reliably detects the operation performed with the touch pen 4 positioned at a proper detection height without detecting the operation performed with the touch pen 4 positioned farther (higher) beyond the detection height, whereby the same can easily precisely detect the operation performed with the touch pen 4.

According to this embodiment, as hereinabove described, the mask 212 limiting the beam receiving range of the beam receiving element 21 is mounted on the beam receiving element 21, and the driving portion 23 is configured to condense the laser beams reflected by the touch pen 4 positioned at the distance within the prescribed range from the projection plane on the beam receiving region 211 of the beam receiving element 21 and to condense the laser beams reflected by the touch pen 4 positioned farther beyond the distance within the prescribed range from the projection plane on the region of the beam receiving element 21 other than the beam receiving region 211 by adjusting the position where the mask 212 is mounted and the relative positions of the beam receiving element 21 and the lens 22. Thus, the mask 212 can easily adjust the beam receiving region 211 of the beam receiving element 21, whereby the main CPU 101 can be easily adjusted to be capable of reliably detecting the operation performed with the touch pen 4 positioned at the proper detection height.

According to this embodiment, as hereinabove described, the mask 212 is configured to limit the beam receiving range of the beam receiving element 21 by partially covering the side of the beam receiving element 21 farther from the projection plane. Thus, the main CPU 101 can be easily rendered not to detect the operation performed with the touch pen 4 positioned farther (higher) beyond the detection height.

According to this embodiment, as hereinabove described, the main CPU 101 is configured to control the driving portion 23 to adjust the relative positions of the beam receiving element 21 and the lens 22 in order to adjust the distance from the projection plane for detecting the operation performed with the touch pen 4 in response to the application corresponding to the projected image 31. Thus, the main CPU 101 can reduce the distance (detection height) from the projection plane for detecting the operation performed with the touch pen 4 when the interval between operation buttons is small and detection accuracy for the touch pen 4 is to be improved or increase the distance (detection height) from the projection plane for detecting the operation performed with the touch pen 4 or the hand (finger) as the detection object when the touch pen 4 or the hand (finger) is not to be brought into contact with the projection plane, whereby the same can properly detect the operation performed with the touch pen 4 in response to the application.

According to this embodiment, as hereinabove described, the main CPU 101 is configured to control the driving portion 23 to adjust the relative positions of the beam receiving element 21 and the lens 22 so that the distance from the projection plane for detecting the operation performed with the touch pen 4 is substantially zero when projecting the image 31 correspondingly to an application displaying a keyboard. Thus, the main CPU 101 recognizes the operation when the touch pen 4 actually touches the projection plane, whereby the same can be inhibited from false detection in the process of movement of the touch pen 4 or the like. Consequently, the main CPU 101 can correctly detect the user's operation performed on the keyboard.

According to this embodiment, as hereinabove described, the main CPU 101 is configured to switch the projector 1 between the first state of detecting the operation performed with the touch pen 4 when the touch pen 4 is in contact with the projection plane and the second state of detecting the operation performed with the touch pen 4 when the touch pen 4 is in the noncontact state separating from the projection plane by the prescribed distance (height h2 (see Fig. 4), for example) by controlling the driving portion 23 to relatively move the beam receiving element 21 and the lens 22. According to this structure, the main CPU 101 can switch the detection height for detecting the operation performed with the touch pen 4 in response to the user's intention.

According to this embodiment, as hereinabove described, the driving portion 23 includes the linear actuator linearly moving the lens 22. Thus, the driving portion 23 can swiftly linearly move the lens 22 with the linear actuator, whereby the time required for adjusting the position of the lens 22 can be easily reduced.

According to this embodiment, as hereinabove described, the beam receiving element 21 is arranged on the side of the image projection portion 109 closer to the projection plane, and configured to receive the laser beams obliquely projected from the image projection portion 109 on the projection plane and reflected by the touch pen 4. Thus, the beam receiving element 21 arranged in the vicinity of the projection plane can easily detect the laser beams reflected by the touch pen 4.

According to this embodiment, as hereinabove described, the main CPU 101 is configured to detect the touch operation performed on the projected image 31 with the touch pen 4. Thus, the main CPU 101 can precisely detect the touch operation performed on the projected image 31 with the touch pen 4.

Although the present invention has been described and illustrated in detail, it is clearly understood that the same is by way of illustration and example only and is not to be taken by way of limitation, the spirit and scope of the present invention being limited only by the terms of the appended claims.

For example, while the image projection portion projects the image on the table as the projection area in the aforementioned embodiment, the present invention is not restricted to this. According to the present invention, the image projection portion may alternatively project the image on a projection area such as a screen, or may project the image on at least two projection areas such as a table and a screen while dividing laser beams.

While the touch pen is employed as the detection object in the aforementioned embodiment, the present invention is not restricted to this. According to the present invention, a hand or a finger may alternatively be employed as the detection object, so far as the same can reflect the laser beams.

While the laser beam sources apply the red, green and blue laser beams for projecting the image so that the main CPU acquires the position (coordinates) of the touch pen as the detection object in the aforementioned embodiment, the present invention is not restricted to this. According to the present invention, the main CPU may alternatively acquire the position (coordinates) of the detection object with a laser beam (invisible laser beam) such as an infrared laser beam, dedicated to detection, not contributing to image projection.

While the driving portion as the position adjustment portion moves the lens in the aforementioned embodiment, the present invention is not restricted to this. According to the present invention, the position adjustment portion may alternatively move the beam receiving portion, or may move both of the beam receiving portion and the lens.

While the driving portion is employed as the position adjustment portion in the aforementioned embodiment, the present invention is not restricted to this. According to the present invention, a moving mechanism 24 employed by the user for manually adjusting relative positions of a beam receiving element 21 and a lens 22 in a direction orthogonal to the optical axis direction of laser beams received by the beam receiving element 21 may alternatively be employed as the position adjustment portion, as in a projector 1a according to a modification shown in Fig. 6. For example, the moving mechanism 24 may be constituted of a combination of worm gears and toothed gears, in order to move the lens 22. The moving mechanism 24 is so configured that the user can move at least either the beam receiving element 21 or the lens 22 after assembling of the projector 1a.

While the condensing lens condensing the laser beams reflected by the touch pen (detection object) on the beam receiving element (beam receiving portion) is employed in the aforementioned embodiment, the present invention is not restricted to this. According to the present invention, a lens other than the condensing lens may alternatively be employed. For example, a collimator lens or the like may be employed.

While the processing of the control portion (main CPU) according to the present invention is described with reference to the flow chart of a flow-driven type successively performing processing along the processing flow in the aforementioned embodiment for the convenience of illustration, the present invention is not restricted to this. According to the present invention, the control portion may alternatively perform event-driven processing every event. In this case, the control portion may perform complete event-driven processing, or a combination of event-driven processing and flow-driven processing.

## Claims

1. A projector (1, 1a) comprising:
a laser beam generation portion (103, 104, 105) outputting a laser beam;
an image projection portion (109) including a scanning portion (109a) scanning the laser beam and projecting an image (31) on a projection area (3);
a beam receiving portion (21) receiving the laser beam reflected by a detection object (4) through a lens (22);
a control portion (101) detecting an operation performed on the projected image with the detection object on the basis of a receptive result in the beam receiving portion; and
a position adjustment portion (23, 24) adjusting relative positions of the beam receiving portion and the lens in a direction orthogonal to the optical axis direction of the laser beam received by the beam receiving portion.

2. The projector according to claim 1, wherein the position adjustment portion is configured to move at least either the beam receiving portion or the lens, in order to move a position where the beam receiving portion receives the laser beam reflected by the detection object substantially perpendicularly to a projection plane for the image.

3. The projector according to claim 1 or 2, wherein
the lens includes a condensing lens (22) condensing the laser beam reflected by the detection object on the beam receiving portion.

4. The projector according to claim 3, wherein
the position adjustment portion is configured to adjust the relative positions of the beam receiving portion and the lens, in order to condense the laser beam reflected by the detection object positioned at a distance within a prescribed range from the projection plane on a beam receiving region of the beam receiving portion and in order to condense the laser beam reflected by the detection object positioned farther beyond the distance within the prescribed range from the projection plane on a region of the beam receiving portion other than the beam receiving region.

5. The projector according to claim 4, wherein
a mask member (212) limiting a beam receiving range of the beam receiving portion is mounted on the beam receiving portion, and
the projector is configured to condense the laser beam reflected by the detection object positioned at the distance within the prescribed range from the projection plane on the beam receiving region of the beam receiving portion and to condense the laser beam reflected by the detection object positioned farther beyond the distance within the prescribed range from the projection plane on the region of the beam receiving portion other than the beam receiving region by adjusting a position where the mask member is mounted and the relative positions of the beam receiving portion and the lens with the position adjustment portion.

6. The projector according to claim 5, wherein
the mask member is configured to limit the beam receiving range of the beam receiving portion by partially covering a side of the beam receiving portion farther from the projection plane.

7. The projector according to any one of claims 1 to 6,
wherein
the control portion is configured to control the position adjustment portion to adjust the relative positions of the beam receiving portion and the lens, in order to adjust the distance from the projection plane for detecting the operation performed with the detection object in response to an application corresponding to the projected image.

8. The projector according to claim 7, wherein
the control portion is configured to control the position adjustment portion to adjust the relative positions of the beam receiving portion and the lens so that the distance from the projection plane for detecting the operation performed with the detection object is substantially zero when projecting the image correspondingly to an application displaying a keyboard.

9. The projector according to any one of claims 1 to 8, wherein
the control portion is configured to switch the projector between a first state of detecting the operation performed with the detection object when the detection object is in contact with the projection plane and a second state of detecting the operation performed with the detection object when the detection object is in a noncontact state separating from the projection plane by a prescribed distance by controlling the position adjustment portion to move at least either the beam receiving portion or the lens.

10. The projector according to any one of claims 1 to 9, wherein
the position adjustment portion includes a driving portion moving the lens with respect to the beam receiving portion in the direction orthogonal to the optical axis direction of the laser beam received by the beam receiving portion.

11. The projector according to claim 10, wherein
the driving portion includes a linear actuator (23) linearly moving the lens.

12. The projector according to any one of claims 1 to 11, wherein
the position adjustment portion includes a moving mechanism employed by the user for moving at least either the beam receiving portion or the lens in the direction orthogonal to the optical axis direction of the laser beam received by the beam receiving portion.

13. The projector according to claim 12, wherein
the moving mechanism is so configured that the user can move at least either the beam receiving portion or the lens after assembling of the projector.

14. The projector according to any one of claims 1 to 13, wherein
the image projection portion is configured to obliquely project the laser beam on the projection plane, and
the beam receiving portion is arranged on a side of the image projection portion closer to the projection plane and configured to receive the laser beam obliquely projected from the image projection portion on the projection plane and reflected by the detection object.

15. The projector according to any one of claims 1 to 14, wherein
the control portion is configured to detect a touch operation performed on the projected image with the detection object.
